# EUROPÄISCHE PATENTANMELDUNG

(11) **EP 1 500 454 A1**
(43) Veröffentlichungstag der Anmeldung: **26.01.2005**
(21) Anmeldenummer: 04013090.8
(22) Anmeldetag: 03.06.2004
(51) Int. Cl.: B23G 5/06

(54) **Gewindebohrer**

(30) Priorität: 19.07.2003 DE 10332930
(71) Anmelder: SANDVIK AKTIEBOLAG, 811 81 Sandviken (SE)
(72) Erfinder: Schwarz, Friedrich, 77962 Schwanau (DE)
(74) Vertreter: Weber, Dieter, Dr.

(57) **Zusammenfassung**

Die vorliegende Erfindung betrifft einen Gewindebohrer (1) mit mindestens zwei Schneidstollen (3) mit Schneidkanten (7). Um einen Gewindebohrer (1) bereitzustellen, der auch bei sehr hohen Schnittgeschwindigkeiten eine ausreichende Prozeßsicherheit gewährleistet, wird erfindungsgemäß vorgeschlagen, daß die Schneidkanten (7) der Schneidstollen (3) mindestens im Anschnitt eine Fase (9) mit negativem Winkel (α) aufweisen, die den Spanwinkel der Schneidkanten reduziert.

## Beschreibung

Die vorliegende Erfindung betrifft einen Gewindebohrer zum Schneiden von Innengewinden mit mindestens zwei Schneidstollen mit Schneidkanten.

Gewindebohrer zum Schneiden von Innengewinden sind aus dem Stand der Technik in vielfältigen Ausführungsformen bekannt.

Die Konstruktion der Gewindebohrer ist zunächst bestimmt durch die unterschiedlichen Gewindearten, die mit Gewindebohrern hergestellt werden können. Metrische ISO-Gewinde für Feinwerktechnik, Gewinde mit Festsitz, Gewinde mit großem Spiel, Gewinde mit kegeligem Schaft, Rohrgewinde, Witworth-Rohrgewinde, Trapezgewinde, Sägengewinde, Rundgewinde, Blechschraubengewinde, etc. verlangen jeweils für die konkrete Anwendung einen speziellen Gewindebohrer zum Erzielen eines optimalen Ergebnisses. Die Werkzeuggestaltung ist darüber hinaus durch den Bohrungsauslauf bestimmt.

In zunehmendem Maße wird die Konstruktion von Gewindebohrern durch das Erfordernis von hohen Schnittgeschwindigkeiten bestimmt. Wurden früher Gewinde von Hand mit Hilfe eines dreiteiligen Satzes von Gewindebohrern gebohrt, so wird maschinell nur mit einem Bohrer gearbeitet. Um höhere Durchsätze bei den Maschinen zu erreichen, sind Schnittgeschwindigkeiten von bis zu 100 m/min möglich. Dazu sind Gewindebohrer notwendig, die aus beschichteten oder unbeschichteten Hartmetallen hergestellt sind.

Die Wahrscheinlichkeit von Brüchen und Ausbrüche aus dem Werkzeug und damit die mit dem jeweiligen Werkzeug zu erzielende Prozeßsicherheit hängt gerade bei den benötigten hohen Schnittgeschwindigkeiten maßgeblich vom Spantransport aus dem Bohrloch ab. Sowohl die Geometrie der Spannuten als auch die Geometrie der mit dem Werkstück in Eingriff tretenden Schneiden haben Einfluß auf den Spantransport aus dem Bohrloch. Während die Geometrie der Spannuten den Transport aus dem Bohrloch bewirkt, bestimmt die Geometrie der Schneiden das Brechen und das Aufrollen der Späne und damit die Transporteigenschaften der aus dem Bohrloch zu fördernden Späne.

Aus dem Stand der Technik sind in Abhängigkeit von dem zu bohrenden Werkstoff Spanwinkel für Gewindebohrer bekannt, die zwischen -2° und +20° betragen. Der Spanwinkel bestimmt in erster Linie die Spanform (Scher-, Bruch- oder Fließspan) und beeinflußt das Schnittmoment. Die Spanform wiederum bestimmt die Transporteigenschaften der Späne.

Alle bisher bekannten Gewindebohrer stoßen bei den bevorzugten hohen Schnittgeschwindigkeiten an ihre Grenzen hinsichtlich der üblichen Anforderungen an die Standzeit von Werkzeugen in modernen Fertigungsabläufen. Aufgrund des unzureichenden Spantransports aus dem Bohrloch kommt es gerade bei hohen Schnittgeschwindigkeiten häufig zu Ausbrüchen aus den Schneidkanten oder sogar zu Brüchen der Gewindebohrer.

Gegenüber dem Stand der Technik liegt der vorliegenden Erfindung die Aufgabe zugrunde, einen Gewindebohrer bereitzustellen, der auch bei sehr hohen Schnittgeschwindigkeiten eine ausreichende Prozeßsicherheit gewährleistet.

Diese Aufgabe wird erfindungsgemäß dadurch gelöst, daß ein Gewindebohrer mit mindestens zwei Schneidkanten bereitgestellt wird, wobei die Schneiden mindestens im Anschnitt eine Schneidkantenfase mit negativem Winkel aufweisen, die den effektiven Spanwinkel der Schneiden reduziert.
Die Oberfläche der Schneidkantenfase bildet mit dem Lot auf die durch die Schneide erzeugte Fläche einen negativen Winkel. Dabei wird die Schneidkante als Übergang von der Freifläche zu der Oberfläche der Fase gebildet und nicht wie bei Gewindebohrern aus dem Stand der Technik von dem Grund der Spannut zu der Freifläche.

Ein Vorteil des erfindungsgemäßen Gewindebohrers ist, daß die von der Schneidkante gebildeten Späne aufgrund der negativen Geometrie der Fase enger gerollt oder auch früher gebrochen werden als bei der Verwendung einer Geometrie mit einem rein positiven Spanwinkel. Dadurch bilden die Späne kompaktere und oft auch kleinere Einheiten, die einfacher aus dem Bohrloch gefördert werden.

Der Gewindebohrer kann insgesamt entweder eine positive oder eine negative Geometrie aufweisen. D.h. der Spanwinkel, der von der Spanfläche und dem Lot auf die durch die Schneide erzeugte Fläche eingeschlossen wird, kann einen positiven oder negativen Wert haben. Da abgesehen von der Fase mit negativem Winkel die positive oder negative Geometrie des Bohrwerkzeugs unmittelbar im Anschluß an die Fase erhalten bleibt, können nach wie vor die Späne in der für das jeweilige Werkstück erforderlichen Art und Weise abgeleitet werden. Die Begriffe "positiv" und "negativ" sind im Sinne der vorstehend wiedergegebenen, üblichen Bezeichnungen für Schneidkantengeometrien bzw. den Spanwinkel an Schneidkanten zu verstehen.

Bei der Ausgestaltung der Geometrie des erfindungsgemäßen Gewindebohrers ist es vorteilhaft, wenn der Winkel der Fase einen Wert zwischen -10° und -60°, vorzugsweise zwischen -30° und -45° und besonders bevorzugt von etwa -35° aufweist, wobei der Winkel zwischen der Oberfläche der Fase und dem Lot der durch die Schneidkante erzeugten Fläche gemessen wird. Unter diesen Winkeln wird bei den meisten wichtigen Werkstoffen eine für den Spantransport optimale Spanformung erreicht.

Bevorzugt wird eine Ausführungsform der Erfindung, bei der die Breite der Fase, gemessen in der Richtung der radialen Ganghöhe, zwischen dem 0,05-fachen und dem 0,75-fachen der Profilhöhe, vorzugsweise zwischen dem 0,1- oder 0,2-fachen und dem 0,5-fachen der Profilhöhe beträgt. Als Profilhöhe wird der radiale Abstand vom Durchmesser des Gewindekerns zum Außendurchmesser des Gewindebohrers bezeichnet. Durch diese Beschränkung der Breite der Fase bzw. der Bereiche der Spanfläche, die mit der Normalen auf der erzeugten Fläche einen negativen Winkel einschließen bleibt die insgesamt positive oder negative spanleitende Geometrie des Bohrers erhalten.

In einer bevorzugten Ausführungsform der Erfindung erstreckt sich die Fase zusätzlich auch auf die Schneidkanten im Bereich des Führungsteils. Dadurch wird auch bei einem möglichen Eingriff von Schneidkanten, die im Bereich des Führungsteils des Gewindebohrers angeordnet sind, eine frühzeitige Spanbrechung und ein Aufrollen der Späne erreicht. Somit werden auch die Transporteigenschaften von Spänen, die vom Führungsteil des Gewindebohrers geschnitten werden, verbessert.

Vorteilhaft ist weiterhin eine Ausführungsform der Erfindung, bei der die Breite der Fase von der Spitze des Gewindeschneiders zum Schaft hin zunimmt.

In einer besonders bevorzugten Ausführungsform ist der Gewindebohrer aus Hartmetall hergestellt.

Weitere Vorteile, Merkmale und Anwendungsmöglichkeiten der vorliegenden Erfindung werden anhand der folgenden beispielhaften Beschreibung einer bevorzugten Ausführungsform und der dazugehörigen Figuren deutlich. Dabei zeigen:
Figur 1 eine Schnittansicht von unten durch den Anschnitt des erfindungsgemäßen Gewindebohrers,
Figur 2 eine vergrößerte Darstellung des in Figur 1 mit einem Kreis markierten Bereichs des Querschnitts des Gewindebohrers,
Figur 3 eine Seitenansicht des Gewindebohrers und
Figur 4 eine dreidimensionale Darstellung eines Ausschnitts mit dem Anschnittbereich des Gewindebohrers.

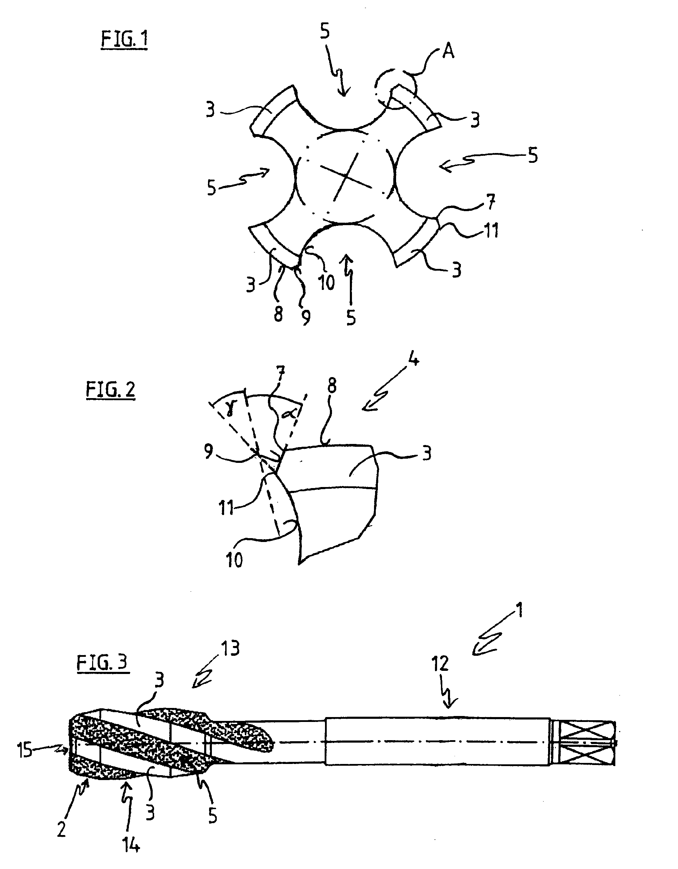

Figur 1 zeigt den Querschnitt durch den erfindungsgemäßen Gewindebohrer 1 im Bereich des Anschnitts 2. Zu erkennen sind die vier Schneidstollen 3, deren Schneiden jeweils im radial außen liegenden linken Bereich angeordnet sind. Zwischen den einzelnen Schneidstollen 3 sind Spannuten 5 angeordnet, durch die die Späne abgeführt werden. In Abhängigkeit von der Art des Bohrlochs können die Spannuten 5 als gerade Nuten für Durchgangsbohrungen oder wie in der dargestellten Ausführungsform mit positivem Drall für Grundlöcher ausgeführt sein. Der positive Drall der Spannuten 5 in der dargestellten Ausführungsform ist deutlich in Figur 3 zu erkennen. Auch sind Spannuten ohne oder mit leicht negativem Drall denkbar.

Wie in Figur 1 angedeutet, sind die Schneidstollen in ihrem radial außen liegenden Bereich angeschliffen. Jeder Gang des Gewindebohrers schneidet bis zu einer bestimmten Tiefe, der Schnittiefe, in das zu bearbeitenden Material ein. Die Schnittiefe entspricht im allgemeinen der Profilhöhe des Bohrers.

Der Bereich der Schneiden der nach innen die radiale Höhe der Gewindegänge begrenzt und dem lichten Gewindedurchmesser entspricht, ist exemplarisch in Figur 1 bei einem Schneidstollen 3 mit dem Kreis A bezeichnet. Der dem Kreis A entsprechende Ausschnitt aus der Figur 1 ist in Figur 2 vergrößert dargestellt. Deutlich ist der Bereich der Schneide 4 des Schneidstollens 3 zu erkennen. In ihrem radial außen liegenden Bereich zeigt die Schneide einen Anschliff. Primär erfolgt die Spanung beim Eingreifen des Bohrers in das Werkstück mit Hilfe der Schneidkanten 7. Diese werden von den aneinanderstoßenden Spanflächen 10 und Freiflächen 8 gebildet. Entscheidend für das erfolgreiche Funktionieren des Gewindebohrers ist, das die Freifläche 8, die im Fall eines Gewindebohrers gekrümmt ist, im Bereich der Schneidkante 7 einen größeren Radius aufweist als auf der der Schneidkante 7 abgewandten Seite des Schneidstollens. Diese Krümmung der Freifläche wird als Hinterschliff bezeichnet. Durch den so gebildeten zunehmenden Tangentialwinkel zwischen der durch die Schneide erzeugte Fläche und der Freifläche 8, dem sogenannte Freiwinkel, wird ein Verkeilen des Werkzeugs mit dem Werkstück verhindert. Die erfindungsgemäße Fase 9 der Spanfläche 10 im Bereich der Schneidkante 7 ist so ausgeführt, daß die Oberfläche der Fase 9 einen negativen Winkel α mit dem Lot auf die durch die Schneide erzeugte Fläche bildet. In der dargestellten Ausführungsform beträgt der Winkel α zwischen der Oberfläche der Fase 9 und dem Lot auf die von der Schneide erzeugte Fläche etwa - 40°. Die Gesamtgeometrie der Schneide 4 wird jedoch nach wie vor von dem positiven Spanwinkel γ, der von der Spanfläche 10 und der Freifläche 8 gebildet wird, bestimmt. Die Fase 9 mit ihrem negativen Winkel α bildet lediglich eine effektive Reduzierung des Spanwinkels γ über eine geringere Schnittiefe. Dort wo die Spanfläche 10 und die Fase 9 aneinanderstoßen, wird eine weitere Kante gebildet, die in Figur 2 mit der Bezugszahl 11 bezeichnet ist, und über welche der Span hinweggeleitet und sehr eng einrollt bzw. bricht.

In Figur 3 ist der gesamte Gewindebohrer 1 in einer seitlichen Ansicht dargestellt. Der Gewindebohrer 1 unterteilt sich in den Schaft 12, der zur Aufnahme des Bohrers in das Bohrfutter dient und das Schneidenteil 13, das mit dem Werkstück in Eingriff tritt. Der schneidende Bereich 13 des Gewindebohrers 1 läßt sich darüber hinaus in den sogenannten Anschnitt 2 und den Führungsteil 14 unterteilen. Der Anschnitt 2, sein Querschnitt ist in den Figuren 1 und 2 gezeigt, verjüngt sich zum Kopf 15 des Bohrers 1 hin. Durch die so gebildete konische Form und die mit zunehmender Eindringtiefe des Bohrers in das Material zunehmende radiale Ganghöhe ist das pro Schneidkante 7 zu spanende Volumen des zu bearbeitenden Materials begrenzt. Am Übergang zwischen dem Anschnitt 2 und dem Führungsteil 14 besitzt der Gewindebohrer 1 seinen größten Umfang. Der Führungsteil 14 wiederum weist ebenfalls eine konische Form auf, verjüngt sich jedoch in Richtung auf den Schaft hin. Dies verhindert, daß sich der Führungsteil 14 mit dem zu bearbeitenden Werkstück verkeilt und das Gewinde beschädigt bzw. seine Oberflächenqualität mindert.

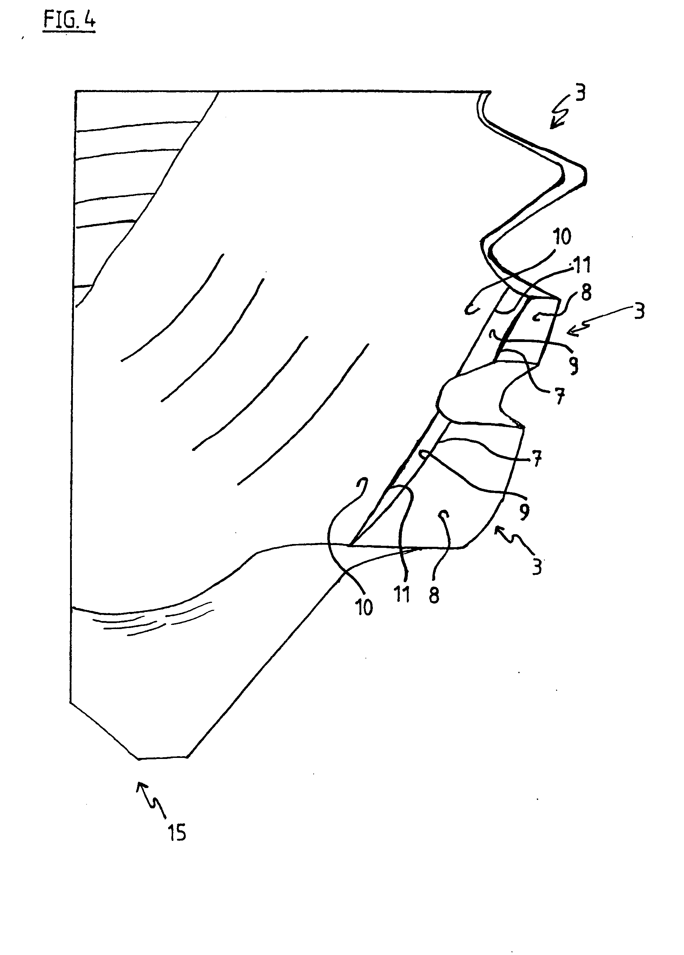

Figur 4 zeigt einen dreidimensionalen Ausschnitt aus dem erfindungsgemäßen Gewindebohrer 1. Deutlich ist die konische Form des Anschnitts 2 des Bohrers 1 mit der mit zunehmender Eindringtiefe zunehmenden Profiltiefe der Schneidstollen 3 zu erkennen. In der gezeigten Ausführungsform nimmt die Breite der Fase 9 mit zunehmender Eindringtiefe ebenfalls zu. Die Schneidengeometrie ist insgesamt positiv, so daß der von zwischen den Verlängerungen der Freiflächen 8 und der Spanflächen 10 gebildete Keilwinkel kleiner als 90° ist, während die Fasenfläche mit der Freifläche einen Winkel von deutlich mehr als 90° einschließt.

## Patentansprüche

1. Gewindebohrer (1) mit mindestens zwei Schneidstollen mit Schneidkanten, **dadurch gekennzeichnet, daß** die Schneidkanten der Schneidstollen mindestens im Anschnitt eine Fase mit negativem Winkel aufweisen, die den Spanwinkel der Schneidkanten reduziert.

2. Gewindebohrer (1) nach Anspruch 1, **dadurch gekennzeichnet, daß** der Gewindebohrer (1) eine, von der Fase abgesehen, insgesamt positive Schneidgeometrie aufweist.

3. Gewindebohrer (1) nach Anspruch 1, **dadurch gekennzeichnet, daß** der Gewindebohrer (1) eine, von der Fase abgesehen, insgesamt negative Schneidgeometrie aufweist.

4. Gewindebohrer (1) nach Anspruch 1, **dadurch gekennzeichnet, daß** der Winkel der Fase, bezogen auf die erzeugte Fläche, einen Wert zwischen -10° und -60°, vorzugsweise zwischen -30° und -45° und besonders bevorzugt von etwa -35° aufweist.

5. Gewindebohrer (1) nach Anspruch 1 oder 2, **dadurch gekennzeichnet, daß** die Breite der Fase zwischen dem 0,05-fachen und dem 0,75-fachen der Profilhöhe, vorzugsweise zwischen dem 0,25-fachen und dem 0,5-fachen der Profilhöhe beträgt.

6. Gewindebohrer nach einem der Ansprüche 1 bis 3, **dadurch gekennzeichnet, daß** sich die Fase zusätzlich auch mindestens auf einen Teil der Schneidkanten im Bereich des Führungsteils erstreckt.

7. Gewindebohrer nach einem der Ansprüche 1 bis 4, **dadurch gekennzeichnet, daß** die Breite der Fase im Anschnittbereich von der Spitze des Gewindebohrers zum Schaft hin zunimmt.

8. Gewindebohrer nach einem der Ansprüche 1 bis 5, **dadurch gekennzeichnet, daß** er aus Hartmetall hergestellt ist.
